# EUROPÄISCHE PATENTSCHRIFT

(11) **EP 3 334 956 B1**
(45) Veröffentlichungstag und Bekanntmachung des Hinweises auf die Patenterteilung: **20.02.2019**
(21) Anmeldenummer: 16790514.0
(22) Anmeldetag: 11.10.2016
(51) Int. Cl.: F16G 13/12, F16G 15/04

(54) **SCHWENKBARES BLOCKSCHLOSS**
PIVOTABLE BLOCK LOCK
MANILLE PIVOTANTE

(30) Priorität: 20.10.2015 DE 102015117860
(43) Veröffentlichungstag der Anmeldung: 20.06.2018
(73) Patentinhaber: Thiele GmbH & Co. KG, 58640 Iserlohn (DE)
(72) Erfinder: BRODZIAK, Eugeniusz, 58640 Iserlohn (DE)
(74) Vertreter: Osterhoff, Utz
(86) Internationale Anmeldenummer: PCT/DE2016/100471
(87) Internationale Veröffentlichungsnummer: WO 2017/067536

(56) Entgegenhaltungen:
- WO-A1-2013/163280
- FR-A- 501 840
- US-A- 1 519 212

## Beschreibung

Die vorliegende Erfindung betrifft ein Blockschloss zur Verbindung zweier Kettenenden gemäß den Merkmalen im Oberbegriff von Patentanspruch 1.

In verschiedenen Anwendungen der Fördertechnik, jedoch auch der Hebe-, Zug- und Zurrtechnik, kommen Kettenschlösser zum Einsatz, um zwei Kettenglieder, zumeist an einem jeweiligen Kettenende, miteinander zu verbinden.

Hierzu ist beispielsweise aus der DE 20 2014 103 197 U1 ein gattungsgemäßes Blockschloss bekannt, welches längliche Blockschlosshälften aufweist, die drehbar um die Hochachse des Blockschlosses miteinander verbunden sind und im verriegelten Zustand unter Ausbildung von zwei Aufnahmeöffnungen formschlüssig zur Anlage kommen.

Weiterhin ist beispielsweise durch die DE 78 01 526 U1 ein Anschluss- und Verbindungselement für Ketten bekannt, in welchem drehbare Haken angeordnet sind, um ein jeweiliges Kettenende aufzunehmen.

Aus der FR 501 840 A ist ein Kettenschloss bekannt, bei dem zwei parallel nebeneinander liegende Laschen drehbar miteinander verbunden sind. Durch Einsetzen von Bolzen und/oder eingehängten Kettengliedern können die parallel nebeneinander angeordneten Laschen verriegelt werden.

Aus der WO 2013/163 280 A1 ist ferner eine Trenneinrichtung für Kettenverbindungen, insbesondere eingesetzt im Marinebereich, bekannt.

Die in Rede stehenden Blockschlösser übertragen hohe Zugkräfte in Kettenlängsrichtung und sind mitunter sperrig und schwer für einen anwendenden Monteur zu handhaben. Ein Blockschloss wiegt leicht mehrere Kilogramm, insbesondere mehr als 10 kg. Hinzu kommt das Gewicht der Kettenenden.

Es ist daher Aufgabe der vorliegenden Erfindung, ein in Rede stehendes Blockschloss in seiner Handhabung zu vereinfachen, bei mindestens gleichbleibender oder gesteigerter Möglichkeit, die Zugkraft zwischen den zu verbindenden Kettengliedern zu übertragen.

Die zuvor genannte Aufgabe wird erfindungsgemäß mit einem Blockschloss zur Verbindung zweier Kettenenden mit den Merkmalen im Patentanspruch 1 gelöst.

Vorteilhafte Ausgestaltungsvarianten sind Gegenstand der abhängigen Patentansprüche.

Das Blockschloss dient zur Verbindung zweier Kettenenden, wobei das Blockschloss im verriegelten Zustand zwei gegenüberliegende, sich in Längsrichtung erstreckende Blockschlosshälften aufweist, welche formschlüssig ineinandergreifen und unter Ausbildung mindestens einer Aufnahmeöffnung, bevorzugt zweier Aufnahmeöffnungen, zur Aufnahme eines Kettengliedes verriegeln. Bei verriegelten Blockschlosshälften sind somit die Kettenglieder eines jeden Kettenendes in einer gemeinsamen Aufnahmeöffnung verriegelt. Bevorzugt jedoch werden zwei Aufnahmeöffnungen ausgebildet, so dass jedes Kettenglied in einer Aufnahmeöffnung gelagert ist.

Erfindungsgemäß zeichnet sich das Blockschloss dadurch aus, dass die Blockschlosshälften schwenkbar im Bereich eines Schwenkendes des Blockschlosses miteinander gekoppelt sind, so dass die Blockschlosshälften bei Ausführen der Schwenkbewegung in eine Öffnungsstellung oder Verriegelungsstellung überführbar sind, wobei in der Verriegelungsstellung an einem gegenüberliegenden Verriegelungsende des Blockschlosses die Blockschlosshälften formschlüssig ineinandergreifen und verriegelbar sind.

Die Schwenkbewegung wird somit nach dem Prinzip der Öffnungsbewegung einer Schere ausgeführt. In der Öffnungsstellung sind beide Blockschlosshälften bevorzugt V-förmig und/oder je nach Öffnungswinkel L-förmig angeordnet. Hierdurch wird erreicht, dass der anwendende Monteur mit nur einer Hand beide Blockschlosshälften, welche unverlierbar, jedoch relativ schwenkbar zueinander miteinander gekoppelt sind, halten kann. Er kann dann die jeweiligen Kettenglieder der zu verbindenden Kettenenden anlegen bzw. einlegen. Bevorzugt ist hierzu an einer Blockschlosshälfte die Aufnahmeöffnung bereits zumindest teilweise ausgebildet.

Sind beide Enden der Kette gekoppelt, kann die Schwenkbewegung ausgeführt und das Blockschloss verriegelt werden. Durch den formschlüssigen Eingriff der beiden Blockschlosshälften im Bereich des Schwenkendes und im Bereich des Verriegelungsendes jeweils ineinander ist eine hohe Zugkraftübertragung in Kettenlängsrichtung gegeben. Durch die Schwenkbarkeit beider Blockschlosshälften relativ zueinander, um eine Öffnungsstellung oder Verriegelungsstellung einzunehmen, wird die Handhabung deutlich vereinfacht.

Im Falle der Ausbildung von zwei Aufnahmeöffnungen sind diese in Verriegelungsstellung durch einen sich von einer Blockschlosshälfte zu der gegenüberliegenden Blockschlosshälfte erstreckenden Mittelsteg voneinander getrennt. Der Mittelsteg ist dazu bevorzugt zu jeweils einem Teil an jeder Blockschlosshälfte ausgebildet. Bevorzugt sind somit 50 % der Erstreckung des Mittelstegs an einer Blockschlosshälfte und die anderen 50 % der Erstreckung des Mittelstegs an der anderen Blockschlosshälfte ausgebildet. Auch wäre eine Teilung in einem beliebigen anderweitigen Verhältnis möglich, beispielsweise 10 % zu 90 % oder 30 % zu 70 %. Im Rahmen der Erfindung wäre es auch vorstellbar, dass der Mittelsteg gänzlich an nur einer Blockschlosshälfte ausgebildet ist und dann in Verriegelungsstellung ein Ende des Mittelsteges an der anderen Blockschlosshälfte formschlüssig zur Anlage kommt. Ebenfalls ist vorstellbar, dass der Mittelsteg in Verriegelungsstellung formschlüssig verriegelt, um die zu übertragene Zugkraft weiter zu erhöhen.

Weiterhin besonders bevorzugt ist die Schwenkbewegung zum Einnehmen der Öffnungsstellung formschlüssig begrenzt. Vorzugsweise bei einem Winkel der Blockschlosshälften zueinander in Öffnungsstellung kleiner gleich 150 Grad, insbesondere kleiner gleich 120 Grad, vorzugsweise kleiner gleich 100 Grad, bevorzugt kleiner gleich 90 Grad und insbesondere kleiner 70 Grad. Hierdurch wird insbesondere ein Überklappen der Blockschlosshälften zueinander bei Ausführen der Öffnungsbewegung vermieden. Beispielsweise können somit bei Einnehmen der Öffnungsstellung beide Blockschlosshälften nicht zueinander in einen Winkel von 180 Grad oder mehr aufklappen. Insbesondere wird hierdurch wiederum die Handhabung bei Einhängen der jeweiligen Kettenenden in das Blockschloss vereinfacht und auch die Betriebssicherheit im Umgang mit dem Blockschloss gesteigert.

Insbesondere weist eine Blockschlosshälfte im Bereich des Schwenkendes eine gegenüber dem länglichen Körper sich erhebende Mittelrippe auf und die andere Blockschlosshälfte mit zwei sich gegenüber deren länglichen Körper erhebende Gabelrippen auf. Die Mittelrippe wird dann bei Zusammensetzen des Blockschlosses zwischen die Gabelrippen eingreifend angeordnet. Zum schwenkbaren Verbinden beider Blockschlosshälften wird ein Schwenkbolzen lösbar die Mittelrippe und die Gabelrippen durchgreifend angeordnet. Um den Schwenkbolzen, insbesondere die Mittellängsachse des Schwenkbolzens, wird dann die Schwenkbewegung bei Einnehmen der Öffnungsstellung und/oder Schließstellung ausgeführt.

Der Schwenkbolzen wird insbesondere formschlüssig in der Mittelrippe lagefixiert. In bevorzugter Ausgestaltungsvariante weist der Schwenkbolzen eine zumindest abschnittsweise, insbesondere vollständig, umlaufende Nut auf, wobei in die Mittelrippe ein Sicherungsmittel einsetzbar ist, welches zumindest teilweise formschlüssig in die Nut eingreift. Hierdurch wird eine Bewegung des Schwenkbolzens in dessen Längsrichtung verhindert. Insbesondere im Falle einer vollständig umlaufenden Nut ist der Schwenkbolzen formschlüssig, jedoch drehbeweglich in der Mittelrippe gelagert. Mithin können die beiden Blockschlosshälften eine relative Schwenkbewegung um die Mittellängsachse des Schwenkbolzens zueinander ausführen. Zugleich ist jedoch der Schwenkbolzen relativ gegenüber beiden Blockschlosshälften drehbar gelagert. Dies verbessert die Möglichkeit, insbesondere nach erfolgtem Einsatz des Blockschlosses, dass die Schwenkbewegung um den Schwenkbolzen ausgeführt werden kann. Sollte beispielsweise der Schwenkbolzen in den Gabelrippen verkanten, ist immer noch eine Drehbeweglichkeit relativ zur Mittelrippe möglich.

Auf der gegenüberliegenden Seite der Blockschlosshälfte ist im Bereich des Verriegelungsendes ein Mittelfortsatz ausgebildet. Die andere Blockschlosshälfte weist einen gegenüber dessen länglichen Körper sich erhebenden Gabelfortsatz auf, wobei in Verriegelungsstellung der Gabelfortsatz den Mittelfortsatz formschlüssig zumindest teilweise umgreift. Der Mittelfortsatz greift somit, bei Ausführen der Schwenkbewegung beider Blockschlosshälften zueinander, in den Gabelfortsatz ein.

Weiterhin besonders bevorzugt sind an dem Übergang des länglichen Körpers der Blockschlosshälfte zum Mittelfortsatz seitlich abstehende Schultern ausgebildet, wobei in Richtung zur Aufnahmeöffnung liegende Rückseiten des Gabelfortsatzes der anderen Blockschlosshälfte in Verriegelungsstellung formschlüssig an den Schultern anliegen. Auch hierdurch wird wiederum die zu übertragende Zugkraft, zumindest gegenüber bekannten Blockschlössern, mindestens gleichbleibend realisiert oder sogar erhöht.

Die Schultern weisen einen zur gegenüberliegenden Blockschlosshälfte gekrümmten Verlauf auf, wobei der Bogen der Krümmung in Richtung Verriegelungsende orientiert ist. Die Rückseiten des Gabelfortsatzes weisen einen zu dem gekrümmten Verlauf der Schultern invers angeordneten gekrümmten Verlauf auf, so dass in Verriegelungsstellung eine vollflächige Anlage im Bereich der entstehenden Kontaktfläche zwischen beiden Krümmungen vorliegt. Bevorzugt ist zumindest ein Teil des Krümmungsradius der Schultern von dem Abstand zur Mittellängsachse des Schwenkbolzens kommend ausgebildet.

Weiterhin besonders bevorzugt weist das Blockschloss im Bereich des Verriegelungsendes ein Verriegelungselement auf, welches formschlüssig das Blockschloss von einer Seite zur anderen Seite durchgreifend, einsetzbar ist.

Es ist jedoch auch vorstellbar, dass das Verriegelungselement anderweitig gesichert wird, beispielsweise durch formschlüssigen Sitz.

Besonders bevorzugt ist das Verriegelungselement als blockartiger, besonders bevorzugt massiver Körper ausgebildet. Weiterhin besonders bevorzugt weist der blockartige Körper einen Querschnitt auf, welcher viereckig ausgebildet ist und ganz besonders bevorzugt rechteckig, wobei die Ecken selbst abgerundet sind. Insbesondere durch die rechteckige Querschnittsform ist es somit möglich, das Verriegelungselement in richtiger Positionierung ohne Verwechslungsgefahr ordnungsgemäß in eine entsprechende Verriegelungsöffnung einzuführen, um die Verriegelungsposition einzunehmen. Weiterhin besonders bevorzugt ist die längere Seite des Rechtecks von einer Oberseite zu einer Unterseite des Blockschlosses verlaufend ausgebildet. Hierdurch ist ein höheres Widerstandsmoment gegen ein Öffnen gegeben. Die kürzere Seite des Rechtecks im Querschnitt ist dann in Kettenlängsrichtung verlaufend ausgebildet, so dass möglichst viel Material beider Blockschlosshälften im Bereich des Verriegelungsendes vorhanden ist, um eine hohe Zugkraft zu übertragen.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: eine Verriegelungsanordnung von zwei Kettenenden mit einem erfindungsgemäßen Blockschloss in perspektivischer Ansicht,
- Figur 2: die Verriegelungsanordnung in Seitenansicht,
- Figur 3: die Verriegelungsanordnung in Draufsicht,
- Figur 4: das erfindungsgemäße Blockschloss in Seitenansicht im geöffneten Zustand,
- Figur 5: eine geöffnete perspektivische Ansicht,
- Figur 6a bis d: das erfindungsgemäße Blockschloss in verschiedenen Ansichten,
- Figur 7: das erfindungsgemäße Blockschloss in perspektivischer Ansicht mit separat angeordnetem Schwenkelement und Verriegelungselement,
- Figur 8: eine Längsschnittansicht durch das erfindungsgemäße Blockschloss in Verriegelungsstellung,
- Figur 9: eine alternative Ausgestaltungsvariante eines Blockschlosses in Längsschnittansicht,
- Figur 10: eine dazugehörige Perspektivansicht des Blockschlosses in Verriegelungsstellung und
- Figur 11a bis c: eine alternative Ausgestaltungsvariante des Verriegelungselementes.

In den Figuren werden für gleiche oder ähnliche Bauteile dieselben Bezugszeichen verwendet, auch wenn eine wiederholte Beschreibung aus Vereinfachungsgründen entfällt.

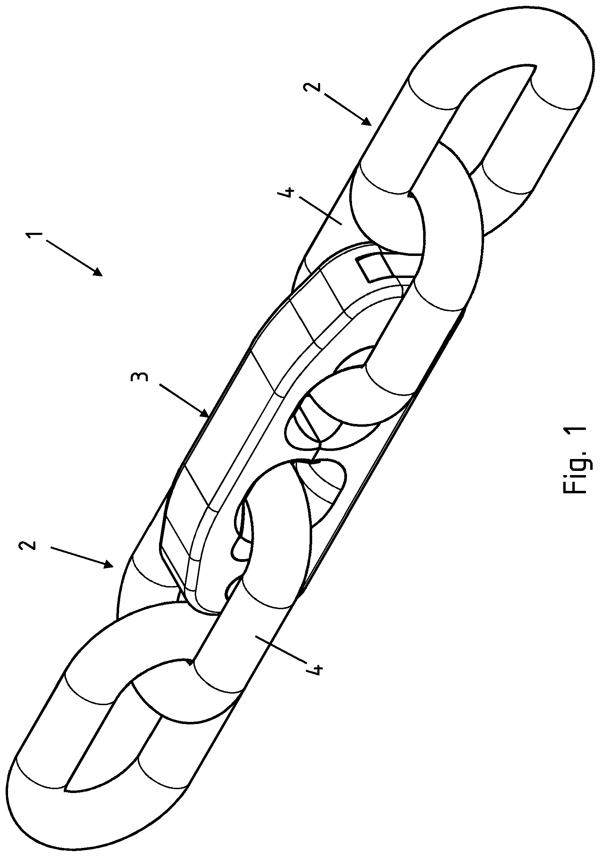

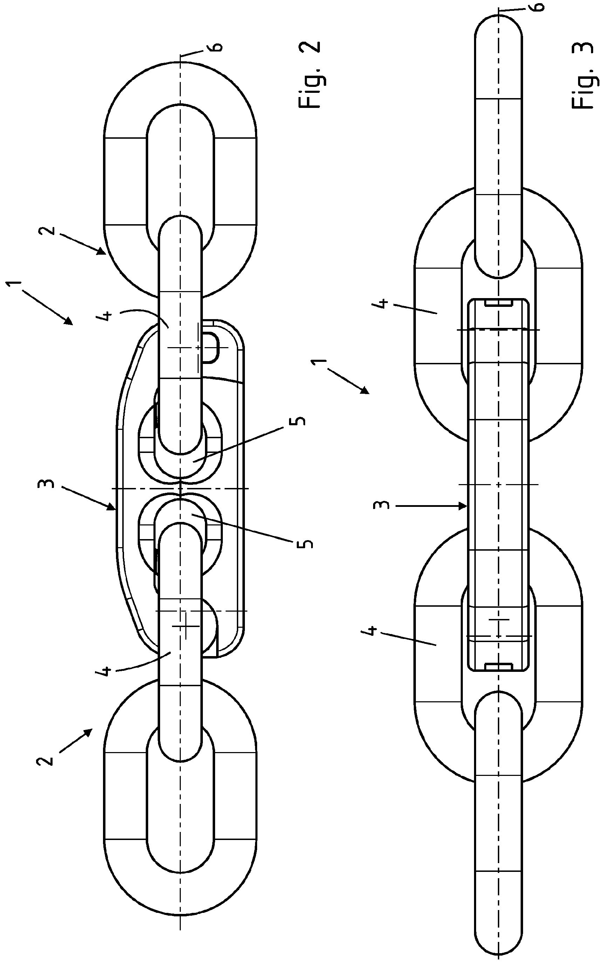

Figuren 1, 2 und 3 zeigen eine Verriegelungsanordnung 1 zweier Kettenenden 2 unter Einsatz eines erfindungsgemäßen Blockschlosses 3. Hierzu sind jeweils die letzten Kettenglieder 4 des jeweiligen Kettenendes 2 in einer Aufnahmeöffnung 5 des Blockschlosses 3 aufgenommen. In Kettenlängsrichtung 6 kann somit eine Zugkraft übertragen werden.

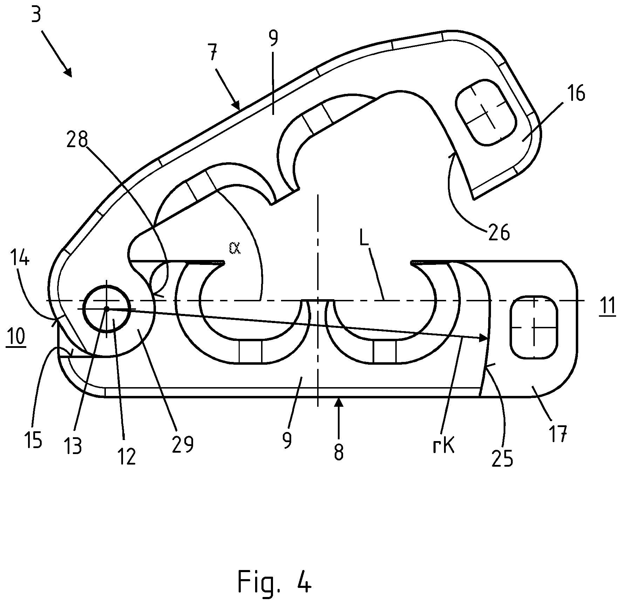

In Figur 4 ist das erfindungsgemäße Blockschloss 3 in Seitenansicht dargestellt. Gut zu erkennen ist, dass eine auf die Bildebene bezogen obere Blockschlosshälfte 7 und eine auf die Bildebene bezogen untere Blockschlosshälfte 8 jeweils einen länglichen Körper 9 aufweisen. Auf die Bildebene bezogen auf der linken Seite ist ein Schwenkende 10 ausgebildet und auf der Bildebene bezogen auf der rechten Seite ist ein Verriegelungsende 11 ausgebildet. Ferner ist die Längsrichtung L des Blockschlosses 3 gezeigt.

Im Bereich des Schwenkendes 10 ist ein Schwenkbolzen 12 die Blockschlosshälften 7, 8 in diesem Bereich durchgreifend eingesetzt. Dieser Schwenkbolzen 12 weist eine Schwenkachse 13 auf, um welche die beiden Blockschlosshälften 7, 8 erfindungsgemäß relativ zueinander schwenkbar gelagert sind. Somit ist es möglich, beide Blockschlosshälften 7, 8 relativ zueinander zu verschwenken, um eine Öffnungsstellung oder aber eine Verriegelungsstellung einzunehmen.

In Öffnungsstellung weisen beide Blockschlosshälften 7, 8 einen Winkel α zueinander auf. Bevorzugt ist dieser Winkel α begrenzt. Diese Begrenzung wird insbesondere durch einen Formschluss hervorgerufen: Eine rückwärtige Schulter 14 der oberen Blockschlosshälfte 7 kommt bei Erreichen der maximalen gewollten Öffnungsstellung auf eine Auflagenfläche 15 der unteren Blockschlosshälfte 8 formschlüssig zur Auflage. Durch Auslegung von Schulter 14 und Auflagenfläche 15 kann dann der Winkel α eingestellt werden. Ein weiteres Öffnen, mithin eine Vergrößerung des Winkels a, ist dann nicht mehr möglich.

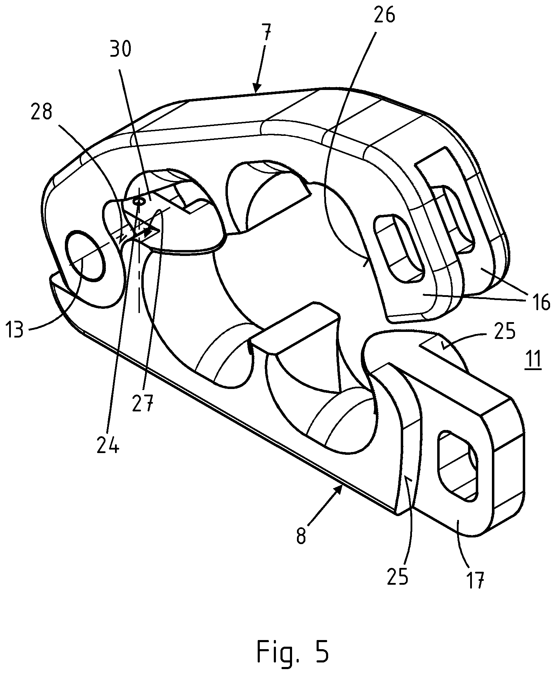

Ferner gut zu erkennen ist, dass an einem jeweiligen Ende einer jeden Blockschlosshälfte 7, 8 gegenüber dem länglichen Körper 9 Erhebungen ausgebildet sind. Mit Verweis auf Figur 5, welche eine perspektivische Ansicht von Figur 4 darstellt, ist auf die Bildebene bezogen auf der rechten Seite der oberen Blockschlosshälfte 7 im Bereich des Verriegelungsendes 11 ein Gabelfortsatz 16 als Erhebung ausgebildet. Die Erhebung steht somit mit zwei platten- bzw. scheibenartigen Körpern gegenüber dem länglichen Körper 9 der oberen Blockschlosshälfte 7 auf die Bildebene bezogen nach unten über.

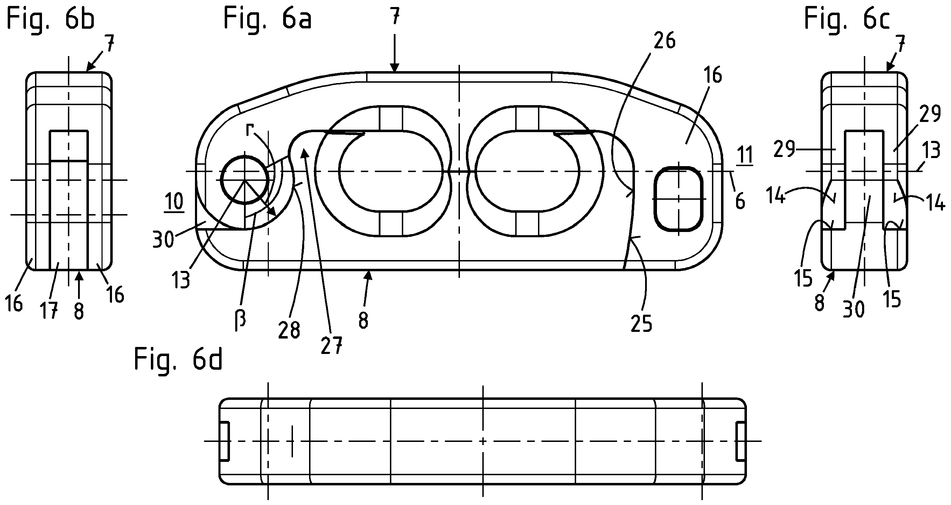

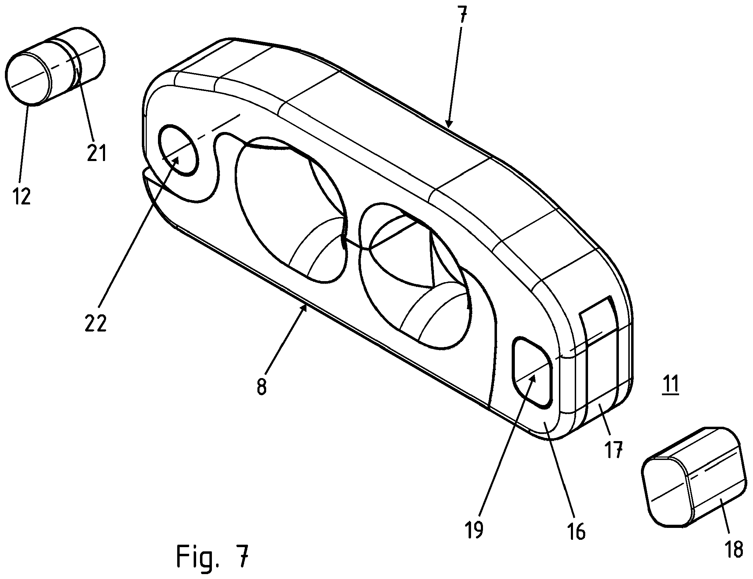

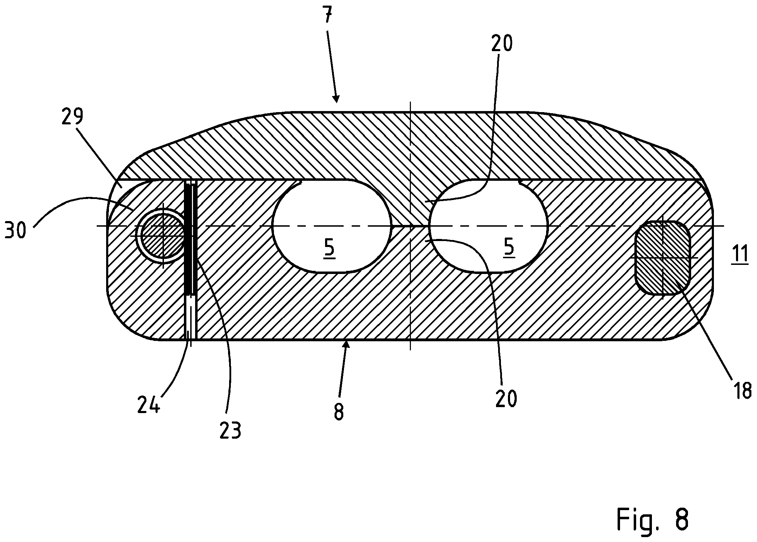

Die Erhebung der unteren Blockschlosshälfte 8 ist zumindest zum Teil als Mittelfortsatz 17 ausgebildet, wobei in Verriegelungsstellung gemäß Figur 6b der Mittelfortsatz 17 auf beiden Seiten von dem jeweiligen Gabelfortsatz 16 formschlüssig umgriffen ist. Sodann wird ein in Figur 7 und Figur 8 dargestelltes Verriegelungselement 18 im Bereich des Verriegelungsendes 11 den Gabelfortsatz 16 und den Mittelfortsatz 17 von jeder Seite der beiden Blockschlosshälften 7, 8 durchgreifend eingesetzt.

Das Verriegelungselement 18 selbst ist als blockartiger Köper ausgebildet, was in Figur 7 dargestellt ist. Das Verriegelungselement 18 besitzt insbesondere eine Querschnittskonfiguration, die, ersichtlich aus Figur 8, als Rechteck mit abgerundeten Ecken ausgebildet ist. Ferner gut ersichtlich gemäß Figur 8 ist, dass beide Blockschlosshälften 7, 8 einen Teil eines Mittelsteges 20 aufweisen, so dass die zwei Aufnahmeöffnungen 5 im verriegelten Zustand ausgebildet werden.

Damit die Schwenkbewegung beider Blockschlosshälften 7, 8 ausgeführt werden kann, ist der Schwenkbolzen 12 als zylindrischer Körper ausgebildet, welcher wiederum besonders bevorzugt eine umlaufende Nut 21 besitzt. Somit kann der Schwenkbolzen 12 die beiden Blockschlosshälften 7, 8 durchgreifen und in eine Schwenkbolzenöffnungen 22 eingesetzt werden und wiederum gut ersichtlich in Figur 8 durch ein Sicherungsmittel 23, beispielsweise in Form eines Splintes oder einer Madenschraube, in seiner Axialrichtung gegen ein Herausrutschen aus den Blockschlosshälften 7, 8 gesichert werden. Mithin kann der Schwenkbolzen 12 nicht in Richtung der Schwenkachse 13 axial verschoben werden. Gleichzeitig bleibt jedoch aufgrund dieser Sicherungsmaßnahme die Möglichkeit, dass der Schwenkbolzen 12 sowohl eine Relativbewegung zur oberen Blockschlosshälfte 7 als auch eine Relativbewegung zur unteren Blockschlosshälfte 8 durchführen kann. Eine Öffnung 24 zum Einsetzen bzw. Austreiben des Sicherungsmittels 23 durchgreift die Erhebung der unteren Blockschlosshälfte 8 vollständig, was gemäß Figur 8 und 5 gut ersichtlich ist.

Damit die erfindungsgemäße Blockschlosshälfte 7, 8 mindestens gleichbleibende bzw. erhöhte Zugkräfte übertragen kann, ist ferner vorgesehen, dass im Bereich des Verriegelungsendes 11 an dem Übergang zum Mittelfortsatz 17 Schultern 25 ausgebildet sind. Diese Schultern 25 weisen einen gekrümmten Verlauf auf, wobei ein Krümmungsradius rK bevorzugt um die Schwenkachse 13 rotiert. Der Gabelfortsatz 16 weist hierzu Rückseiten 26 auf, wobei in Verriegelungsstellung gut ersichtlich in Figur 6a die Rückseiten 26 formschlüssig, bevorzugt im gesamten Bereich der sich bildenden Anlagenfläche, an den Schultern 25 zur Anlage kommen. Die in Kettenlängsrichtung 6 zu übertragende Zugkraft wird somit gesteigert.

Ebenfalls im Bereich des Schwenkendes 10 ist an der Erhebung der unteren Blockschlosshälfte 8 eine zumindest teilweise in Richtung der Schwenkachse 13 orientiert verlaufende Anlagenschulter 27 ausgebildet, die im Verriegelungszustand formschlüssig mit einer Anlagenfläche 28 der oberen Blockschlosshälfte 7 zur Anlage kommt. Die Anlagenfläche 28 ist dabei an Gabelrippen 29 der oberen Blockschlosshälfte 7 ausgebildet, welche formschlüssig eine Mittelrippe 30 der unteren Blockschlosshälfte 8 seitlich umgreifen, um ein axiales Abgleiten in Richtung der Schwenkachse 13 zu verhindern. Gut dargestellt ist dies in Figur 6c. Insbesondere die Anlagenfläche 28 verläuft somit zumindest abschnittsweise mit einem konstanten Radius r um die Schwenkachse 13, bevorzugt in einem Winkelbereich β größer 90 Grad, besonders bevorzugt zwischen 100 Grad und 150 Grad. Hierdurch wird die im Verriegelungszustand ausgebildete Fläche zwischen Anlagenschulter 27 und Anlagenfläche 28 maximiert und somit im Bereich des Schwenkendes 10 die mögliche zu übertragende Zugkraft in Kettenlängsrichtung 6 wiederum gesteigert.

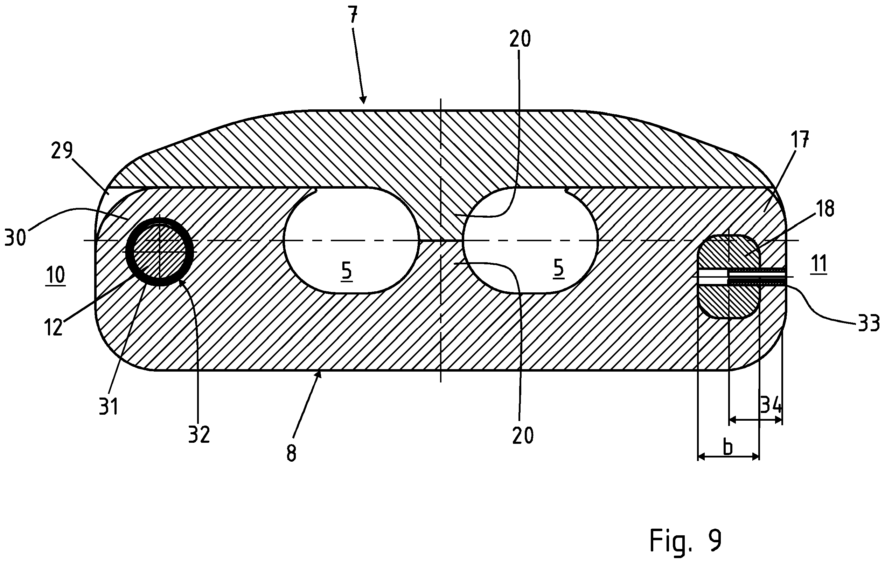

Figur 9 zeigt eine alternative Ausgestaltungsvariante des Blockschlosses 3 in Längsschnittansicht. Auf die Bildebene bezogen auf der linken Seite ist hierbei der Schwenkbolzen 12 nicht mit einem Sicherungsmittel 23 wie in Figur 8 gegen axiales Verschieben gesichert, sondern mit einem in der Nut 21 des Schwenkbolzens 12 angeordneten Sprengring 31. Dieser Sprengring 31 wird somit zum Einsetzen des Schwenkbolzens 12 in seiner Radialrichtung zusammengedrückt bzw. komprimiert und in die Schwenkbolzenöffnung 22 eingeführt. Die Schwenkbolzenöffnung 22 weist gemäß Längsschnitt von Figur 9, mithin im Bereich der Mittelrippe 30, eine umlaufende Sprengringnut 32 auf. Ist der Schwenkbolzen 12 in Axialrichtung so weit eingeschoben, dass der Sprengring 31 die Sprengringnut 32 erreicht hat, expandiert der Sprengring 31 radial und greift somit in die Sprengringnut 32 und gleichzeitig auch die Nut 21 des Schwenkbolzens 12 ein. Der Schwenkbolzen 12 ist somit gegen axiales Verschieben gesichert.

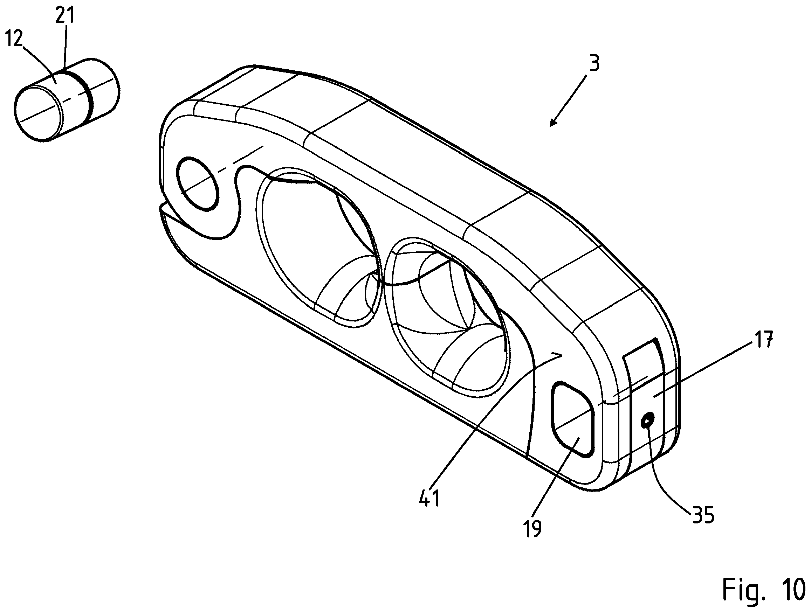

Auf die Bildebene von Figur 9 bezogen auf der rechten Seite ist eine alternative Ausgestaltungsvariante des Verriegelungselementes 18 dargestellt. Dieses ist ebenfalls als Rechteckbolzen mit abgerundeten Ecken ausgebildet. Wie in Figur 9 dargestellt, ist dieser gegen axiales Verschieben durch einen in das Verriegelungselement 18 und Mittelfortsatz 17 eingeführten Spannstift 33 gesichert. Der Spannstift 33 weist eine Länge 34 auf, die kleiner gleich, insbesondere kleiner der Breite b des Verriegelungselementes 18 ist. Somit kann zur Demontage des Verrieglungselementes 18 der Spannstift 33 in einer in Figur 10 dargestellten Spannstiftöffnung 35, auf die Bildebene von Figur 9 bezogen, nach links in das Verriegelungselement 18 hineingedrückt bzw. hineingeschlagen werden. Im Anschluss daran, kann das Verriegelungselement 18 auf seine Axialrichtung bezogen aus der Verriegelungsöffnung 19 herausgedrückt bzw. herausgeschlagen werden. Der Spannstift 33 steht aufgrund seiner kürzeren Länge 34 in Relation zu der Breite b des Verriegelungselementes 18 nicht gegenüber einer Seite des Verriegelungselementes 18 hervor.

Die alternativen Ausgestaltungsvarianten für den Schwenkbolzen 12, jedoch auch für das Verriegelungselement 18 können jeweils für sich allein mit den zuvor beschriebenen Merkmalen des Blockschlosses 3 kombiniert werden.

Figur 10 zeigt eine perspektivische Ansicht gemäß den Ausführungen zu Figur 9. Gut zu erkennen ist die Nut 21 des Schwenkbolzens 12 sowie die Spannstiftöffnung 35 in dem Mittelfortsatz 17.

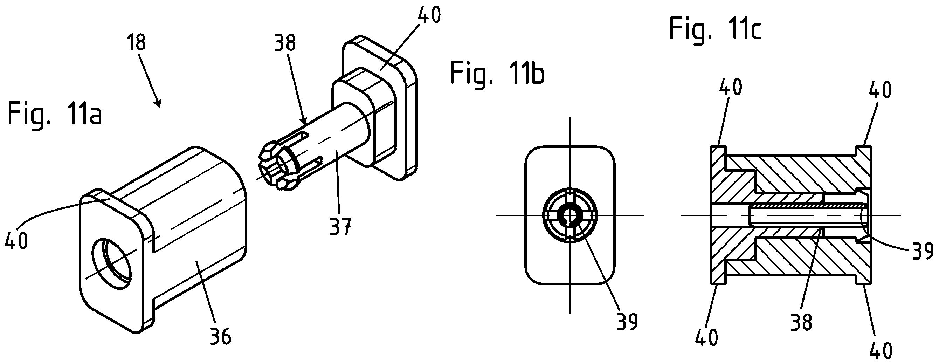

Figur 11a bis c zeigen eine alternative Ausgestaltungsvariante des Verriegelungselementes 18. Dieses ist hierzu mehrteilig ausgebildet, wobei ein Basiskörper 36 die eigentliche Funktion des Verriegelungselementes 18 übernimmt, welcher formschlüssig in die Verriegelungsöffnung 19 von einer Seite her einführbar ist. Ein Sicherungskörper 37 weist dazu einen Bolzenfortsatz 38 mit Schnappverschluss auf, welcher von der anderen Seite des Blockschlosses 3 in den Basiskörper 36 eingesetzt ist. In den Bolzenfortsatz 38 mit Schnappverschluss wird im verriegelten Zustand ein Spannstift 39 eingesetzt, so dass der Schnappverschluss radial nicht zusammengedrückt werden kann. Zur Demontage wird dann der Spannstift 39 aus dem Bolzenfortsatz 38 herausgedrückt bzw. herausgeschlagen und der Sicherungskörper 37 kann aus dem Basiskörper 36 ausgeschlagen werden. Sowohl Basiskörper 36 als auch Sicherungskörper 37 weisen Seitenflanken 40 auf, die an, in Figur 10 angedeuteten, Seitenflächen 41 des Blockschlosses 3 formschlüssig zur Anlage kommen und das Verriegelungselement 18 in dessen Axialrichtung formschlüssig in der Verriegelungsöffnung 19 halten.

### Bezugszeichen:

- 1 -: Verriegelungsanordnung
- 2 -: Kettenende
- 3 -: Blockschloss
- 4 -: Kettenglied
- 5 -: Aufnahmeöffnung
- 6 -: Kettenlängsrichtung
- 7 -: obere Blockschlosshälfte
- 8 -: untere Blockschlosshälfte
- 9 -: länglicher Köper
- 10 -: Schwenkende
- 11 -: Verriegelungsende
- 12 -: Schwenkbolzen
- 13 -: Schwenkachse
- 14 -: Schulter
- 15 -: Auflagenfläche
- 16 -: Gabelfortsatz
- 17 -: Mittelfortsatz
- 18 -: Verriegelungselement
- 19 -: Verriegelungsöffnung
- 20 -: Mittelsteg
- 21 -: Nut zu 12
- 22 -: Schwenkbolzenöffnung
- 23 -: Sicherungsmittel
- 24 -: Öffnung
- 25 -: Schulter zu 17
- 26 -: Rückseite zu 16
- 27 -: Anlagenschulter
- 28 -: Anlagenfläche
- 29 -: Gabelrippe
- 30 -: Mittelrippe
- 31 -: Sprengring
- 32 -: Sprengringnut
- 33 -: Spannstift
- 34 -: Länge
- 35 -: Spannstiftöffnung
- 36 -: Basiskörper
- 37 -: Sicherungskörper
- 38 -: Bolzenfortsatz
- 39 -: Spannstift
- 40 -: Seitenflanken
- 41 -: Seitenflächen

- α -: Winkel
- β -: Winkelbereich
- b -: Breite
- r -: Radius
- rK -: Krümmungsradius
- L -: Längsrichtung

## Patentansprüche

1. Blockschloss (3) zur Verbindung zweier Kettenenden (2), wobei das Blockschloss (3) im verriegelten Zustand zwei gegenüberliegende, sich in Längsrichtung (L) erstreckende Blockschlosshälften (7, 8) aufweist, welche formschlüssig ineinandergreifen und unter Ausbildung mindestens einer Aufnahmeöffnung (5), bevorzugt zweier Aufnahmeöffnungen (5), zur Aufnahme eines Kettengliedes (4) verriegeln, wobei die Blockschlosshälften (7, 8) schwenkbar im Bereich eines Schwenkendes (10) miteinander gekoppelt sind, so dass die Blockschlosshälften (7, 8) bei Ausführen der Schwenkbewegung in eine Öffnungsstellung oder Verriegelungsstellung überführbar sind, **dadurch gekennzeichnet, dass** die Blockschlosshälften (7, 8) in der Verriegelungsstellung an einem gegenüberliegenden Verriegelungsende (11) formschlüssig ineinandergreifen und verriegelbar sind.

2. Blockschloss nach Anspruch 1, **dadurch gekennzeichnet, dass** die zwei Aufnahmeöffnungen (5) durch einen sich von einer Blockschlosshälfte (7) zu der gegenüberliegenden Blockschlosshälfte (8) erstreckenden Mittelsteg (20) voneinander getrennt sind, wobei der Mittelsteg (20) bevorzugt zu jeweils einem Teil an jeder Blockschlosshälfte (7, 8) ausgebildet ist.

3. Blockschloss nach Anspruch 1 oder 2, **dadurch gekennzeichnet, dass** die Schwenkbewegung zum Einnehmen der Öffnungsstellung formschlüssig begrenzt ist, vorzugsweise bei einem Winkel (a) der beiden Blockschlosshälften (7, 8) zueinander kleiner gleich 120 Grad, vorzugsweise kleiner gleich 100 Grad, besonders bevorzugt kleiner gleich 90 Grad und insbesondere kleiner 70 Grad.

4. Blockschloss nach einem der vorhergehenden Ansprüche, **dadurch gekennzeichnet, dass** eine Blockschlosshälfte (8) im Bereich des Schwenkendes (10) eine gegenüber dem länglichen Körper (9) sich erhebende Mittelrippe (30) aufweist und die andere Blockschlosshälfte (7) zwei sich gegenüber deren länglichen Körper (9) erhebende Gabelrippen (29) aufweist, wobei die Mittelrippe (30) in die Gabelrippen (29) eingreifend angeordnet ist und ein Schwenkbolzen (12) lösbar die Mittelrippe (29) und Gabelrippen (30) durchgreifend angeordnet ist.

5. Blockschloss nach dem vorhergehenden Anspruch, **dadurch gekennzeichnet, dass** der Schwenkbolzen (12) formschlüssig in der Mittelrippe (30) lagefixierbar ist, insbesondere weist der Schwenkbolzen (12) eine Nut (21) auf, wobei in die Mittelrippe (30) ein Sicherungsmittel (23) einsetzbar ist, welches zumindest teilweise formschlüssig in die Nut (21) eingreift, so dass insbesondere eine Bewegung des Schwenkbolzens (12) in dessen Längsrichtung verhindert ist, wobei vorzugsweise der Schwenkbolzen (12) drehbeweglich in der Mittelrippe (30) gelagert ist oder dass der Schwenkbolzen (12) eine Nut (21) aufweist, wobei in der Nut ein Sprengring (31) angeordnet ist und der Sprengring (31) in einer Sprengringnut (32) der Mittelrippe (30) formschlüssig eingreift.

6. Blockschloss nach einem der vorhergehenden Ansprüche, **dadurch gekennzeichnet, dass** im Bereich des Verriegelungsendes (11) eine Blockschlosshälfte (8) einen Mittelfortsatz (17) aufweist und die andere Blockschlosshälfte (7) einen gegenüber dessen länglichen Körper (9) erhebenden Gabelfortsatz (16) aufweist, wobei in Verriegelungsstellung der Gabelfortsatz (16) den Mittelfortsatz (17) formschlüssig umgreift.

7. Blockschloss nach dem vorhergehenden Anspruch, **dadurch gekennzeichnet, dass** an dem Übergang zum Mittelfortsatz (17) seitlich abstehende Schultern (25) ausgebildet sind, wobei in Richtung zur Aufnahmeöffnung (5) liegende Rückseiten (26) des Gabelfortsatzes (16) in Verriegelungsstellung formschlüssig an den Schultern (25) anliegen.

8. Blockschloss nach dem vorhergehenden Anspruch, **dadurch gekennzeichnet, dass** die Schultern (25) einen zur gegenüberliegenden Blockschlosshälfte (7) gekrümmten Verlauf aufweisen und dass insbesondere die Rückseiten (26) des Gabelfortsatzes (16) einen zu dem gekrümmten Verlauf der Schultern (14) invers verlaufenden gekrümmten Verlauf aufweisen, so dass in Verriegelungsstellung eine vollflächige Anlage im Bereich der entstehenden Kontaktfläche vorhanden ist, wobei bevorzugt ein Krümmungsbogen der Schulter (25) in Richtung zu dem Verriegelungsende (11) orientiert ist.

9. Blockschloss nach einem der vorhergehenden Ansprüche, **dadurch gekennzeichnet, dass** im Bereich des Verriegelungsendes (11) ein Verriegelungselement (18) formschlüssig einsetzbar ist, insbesondere den Gabelfortsatz (16) und den Mittelfortsatz (17) durchgreifend und optional mit einem Spannstift (33) gegen ein Verschieben in Axialrichtung gesichert ist, wobei der Spannstift (33) bevorzugt eine Länge (34) aufweist, die kürzer einer Breite (b) des Verriegelungselementes (18) ist.

10. Blockschloss nach dem vorhergehenden Anspruch, **dadurch gekennzeichnet, dass** das Verriegelungselement (18) ein blockartiger Körper ist, welcher insbesondere im Querschnitt viereckig, bevorzugt rechteckig ausgebildet ist, wobei besonders bevorzugt die Ecken abgerundet sind.

## Claims

1. Block lock (3) for connecting two chain ends (2), wherein in the locked state the block lock (3) has two opposing block lock halves (7, 8) extending in the longitudinal direction (L), which interlockingly engage in each other and which lock to form at least one receiving opening (5), preferably two receiving openings (5), for receiving a chain link (4), wherein the block lock halves (7, 8) are pivotably coupled together in the region of a pivoting end (10), such that the block lock halves (7, 8) can be shifted into an open position or locked position by performing the pivoting movement, **characterised in that** in the locked position, the block lock halves (7, 8) integrally engage in one another at an opposite locking end (11) and can be locked.

2. Block lock according to claim 1, **characterised in that** the two receiving openings (5) are separated from one another by a central web (20) extending from one block lock half (7) to the opposite block lock half (8), wherein the central web (20) is preferably designed in each case to form a part of each block lock half (7, 8).

3. Block lock according to claim 1 or 2, **characterised in that** the pivoting movement for assuming the open position is positively limited, preferably at an angle (α) of the two block lock halves (7, 8) to each other less than or equal to 120 degrees, preferably less than or equal to 100 degrees, most preferably less than or equal to 90 degrees and in particular less than 70 degrees.

4. Block lock according to any one of the preceding claims, **characterised in that** one block lock half (8) in the region of the pivoting end (10) has a central rib (30) rising relative to the elongate body (9) and the other block lock half (7) has two bifurcated ribs (29) rising relative to their elongate body (9), wherein the central rib (30) is arranged engaging in the bifurcated ribs (29) and a pivot pin (12) is arranged detachably reaching through the central rib (29) and the bifurcated ribs (30).

5. Block lock according to the preceding claims, **characterised in that** the pivot pin (12) can be positively fixed in the central rip (30), in particular the pivot pin (12) has a groove (21), wherein a securing means (23) can be inserted into the central rib (30), which engages positively at least partially into the groove (21), such that in particular a movement of the pivot pin (12) is prevented in its longitudinal direction, wherein preferably the pivot pin (12) is rotatably mounted in the central rib (30) or that the pivot pin (12) has a groove (21), wherein snap ring (31) is arranged in the groove and the snap ring (31) positively engages in a snap ring groove (32) of the central rib (30).

6. Block lock according to any one of the preceding claims, **characterised in that** in the region of the locking end (11) a block lock half (8) has a central extension (17) and the other block lock half (7) has a bifurcated extension (16) rising relative to its elongated body (9), wherein in the locked position the bifurcated extension (16) positively engages around the central extension (17).

7. Block lock according to the preceding claims, **characterised in that** at the transition to the central extension (17) laterally protruding shoulders (25) are formed, wherein rear sides (26) of the bifurcated extension (16) lying in the direction towards the receiving opening (5) in the locked position positively abut against the shoulders (25).

8. Block lock according to the preceding claim, **characterised in that** the shoulders (25) have a course curved to the opposite block lock half (7) and that in particular the rear sides (26) of the bifurcated extension (16) have a curved course running inversely to the curved course of the shoulders (14), so that in the locked position there is a full-surface contact in the region of the resulting contact surface, wherein preferably a curved arc of the shoulder (25) is oriented in the direction towards the locking end (11).

9. Block lock according to any one of the preceding claims, **characterised in that** in the region of the locking end (11) a locking element (18) can be positively inserted, in particular reaching through bifurcated extension (16) and the central extension (17) and optionally is secured with a locking pin (33) against a displacement in the axial direction, wherein the locking pin (33) preferably has a length (34), which is shorter than a width (b) of the locking element (18).

10. Block lock according to the preceding claim, **characterised in that** the locking element (18) is a block-like body, which in particular is in cross section quadrangular, preferably rectangular, wherein most preferably the corners are rounded.

## Revendications

1. Manille (3) pour la liaison de deux extrémités de chaîne (2), dans laquelle la manille (3) présente à l'état verrouillé deux moitiés de manille (7, 8) opposées, s'étendant dans la direction longitudinale (L), lesquelles viennent en prise l'une avec l'autre par complémentarité de forme et se verrouillent en formant au moins une ouverture de logement (5), de préférence deux ouvertures de logement (5), pour le logement d'un maillon de chaîne (4), dans laquelle les moitiés de manille (7, 8) sont couplées l'une à l'autre de manière pivotante dans la zone d'une extrémité de pivotement (10) de sorte que les moitiés de manille (7, 8) peuvent être amenées lors de l'exécution du mouvement de pivotement dans une position d'ouverture ou une position de verrouillage, **caractérisée en ce que** les moitiés de manille (7, 8) viennent en prise l'une avec l'autre par complémentarité de forme et sont verrouillables dans la position de verrouillage au niveau d'une extrémité de verrouillage opposée (11).

2. Manille selon la revendication 1, **caractérisée en ce que** les deux ouvertures de logement (5) sont séparées l'une de l'autre par une traverse médiane (20) s'étendant d'une moitié de manille (7) à la moitié de manille opposée (8), dans laquelle la traverse médiane (20) est réalisée de manière davantage préférée pour respectivement une partie au niveau de chaque moitié de manille (7, 8).

3. Manille selon la revendication 1 ou 2, **caractérisée en ce que** le mouvement de pivotement est limité par complémentarité de forme pour l'adoption de la position d'ouverture, de préférence à un angle (α) des deux moitiés de manille (7, 8) l'une par rapport à l'autre inférieur ou égal à 120 degrés, de préférence inférieur ou égal à 100 degrés, de manière de loin préférée inférieur ou égal à 90 degrés et en particulier inférieur à 70 degrés.

4. Manille selon l'une quelconque des revendications précédentes, **caractérisée en ce qu'**une moitié de manille (8) présente dans la zone de l'extrémité de pivotement (10) une nervure médiane (30) se dressant par rapport au corps allongé (9) et l'autre moitié de manille (7) présente deux nervures en fourche (29) se dressant par rapport à son corps allongé (9), dans laquelle la nervure médiane (30) est agencée en prise dans les nervures en fourche (29) et un axe de pivotement (12) est agencé traversant de manière amovible la nervure médiane (30) et les nervures en fourche (29).

5. Manille selon la revendication précédente, **caractérisée en ce que** l'axe de pivotement (12) peut être fixé en position par complémentarité de forme dans la nervure médiane (30), l'axe de pivotement (12) présente en particulier une rainure (21), dans laquelle un moyen de blocage (23) peut être inséré dans la nervure médiane (30), lequel vient en prise au moins en partie par complémentarité de forme dans la rainure (21), de sorte qu'en particulier un mouvement de l'axe de pivotement (12) dans sa direction longitudinale est empêché, dans laquelle de préférence l'axe de pivotement (12) est logé mobile en rotation dans la nervure médiane (30) ou que l'axe de pivotement (12) présente une rainure (21), dans laquelle un jonc d'arrêt (31) est agencé dans la rainure et le jonc d'arrêt (31) vient en prise par complémentarité de forme dans une rainure de jonc d'arrêt (32) de la nervure médiane (30).

6. Manille selon l'une quelconque des revendications précédentes, **caractérisée en ce qu'**une moitié de manille (8) présente un prolongement médian (17) dans la zone de l'extrémité de verrouillage (11) et l'autre moitié de manille (7) présente un prolongement en fourche (16) se dressant par rapport à son corps allongé (9), dans laquelle le prolongement en fourche (16) entoure le prolongement médian (17) par complémentarité de forme dans la position de verrouillage.

7. Manille selon la revendication précédente, **caractérisée en ce que** des épaulements (25) en saillie latérale sont réalisés au niveau du passage au prolongement médian (17), dans laquelle des faces arrière (26) du prolongement en fourche (16) situées en direction de l'ouverture de logement (5) s'appuient dans la position de verrouillage par complémentarité de forme sur les épaulements (25).

8. Manille selon la revendication précédente, **caractérisée en ce que** les épaulements (25) présentent une allure courbe par rapport à la moitié de manille (7) opposée et qu'en particulier les faces arrière (26) du prolongement en fourche (16) présentent une allure courbe inverse à l'allure courbe des épaulements (14) de sorte qu'il y a un appui sur toute la surface dans la zone de la surface de contact créée dans la position de verrouillage, dans laquelle de manière davantage préférée un arc de courbure de l'épaulement (25) est orienté en direction de l'extrémité de verrouillage (11).

9. Manille selon l'une quelconque des revendications précédentes, **caractérisée en ce qu'**un élément de verrouillage (18) peut être inséré par complémentarité de forme dans la zone de l'extrémité de verrouillage (11), est bloqué contre un coulissement dans la direction axiale traversant en particulier le prolongement en fourche (16) et le prolongement médian (17) et en option avec une goupille de serrage (33), dans laquelle la goupille de serrage (33) présente de manière davantage préférée une longueur (34), qui est inférieure à une largeur (b) de l'élément de verrouillage (18).

10. Manille selon la revendication précédente, **caractérisée en ce que** l'élément de verrouillage (18) est un corps de type bloc, qui est réalisé en particulier avec une section transversale carrée, de manière davantage préférée rectangulaire, dans laquelle les coins sont de manière de loin préférée arrondis.
